# EUROPEAN PATENT SPECIFICATION

(11) **EP 1 703 606 B1**
(45) Date of publication and mention of the grant of the patent: **10.06.2009**
(21) Application number: 06075546.9
(22) Date of filing: 08.03.2006
(51) Int. Cl.: H02G 3/14

(54) **Improved sunken module**
Verbessertes versenktes Modul
Module noyé amélioré

(30) Priority: 16.03.2005 BE 200500137
(43) Date of publication of application: 20.09.2006
(73) Proprietor: NIKO, N.V., B-9100 Sint-Niklaas (BE)
(72) Inventor: Totté, Lieven, 9140 Elversele (BE)
(74) Representative: Plas, Axel Ivo Michel

(56) References cited:
- DE-A- 3 404 585
- FR-A- 2 727 260

## Description

The present invention concerns a sunken module, more particularly a sunken module in the form of a power socket, switch or suchlike sunk into the walls of homes or suchlike.

Such sunken modules are already known of the type that essentially consists of a base plate with a body mounted on it, where in the base plate there are two side edges located opposite one another with male and female connecting parts respectively that fit together, and where such sunken modules mounted beside each other and/or one above each other can be connected together, such that the sunken modules fitted and connected together are always at a specified centre-to-centre distance from one another.

An example is DE 3404585 A1.

It is known that in such sunken modules the abovementioned connecting parts are made in the thickness of the connecting plate, respectively as one or more recesses in one of the abovementioned side edges of the base plate and as parts sticking out on the opposite side of said base plate.

For the purpose of fitting two or more adjacent sunken modules into a wall, these sunken modules are mounted with their body in an opening of the wall and with their base plate resting on the wall, and the sunken modules are mounted with their side edges opposite one another and connected to one another by the male connecting parts of one sunken module fitting into the female connecting parts of another adjacent sunken module.

One disadvantage of the known sunken modules is that when connecting sunken modules located beside each other or one above the other, the relative positioning of one sunken module with respect to the other is limited to the plate thickness in a direction perpendicular to the base plates.

This disadvantage becomes obvious when the wall at the location of the sunken modules to be fitted is not completely flat, as often occurs, and when the difference in level over the distance of the opening to receive the module is greater than the abovementioned plate thickness.

If in such a case the adjacent sunken modules with their base plate are pressed against the wall, then the connecting parts of the adjacent sunken modules will no longer fit into one another, so that the desired centre-to-centre distance between the adjacent sunken modules is no longer guaranteed.

If in this case, according to an alternative method, the connecting parts fit into one another so as to obtain a guaranteed centre to-centre distance, then at least one of the base plates of the sunken modules will no longer be supported by the wall, with all the disadvantages that this entails.

The present invention aims to offer a solution to one or more of the abovementioned and other disadvantages.

To this end, the invention concerns an improved sunken module consisting essentially of a base plate with a body mounted on it, where the base plate has male and female connecting parts respectively on two opposite side edges, with which sunken modules mounted beside each other and/or one above the other can be connected together, characterised in that there is at least one guide for a relative movement between two adjacent connected sunken modules, perpendicular or essentially perpendicular to the plane of the base plate, over a distance that is greater than the thickness of the base plate.

One advantage of the invention is that due to the presence of the abovementioned guide, two connected sunken modules located beside each other or one above the other can be positioned relative to one another in a position perpendicular, or essentially perpendicular, to the plane of the wall over a distance greater than the thickness of the base plate, so that deviations in the wall at the location of the opening to receive the module can be compensated more easily than in the known sunken modules.

In a preferred embodiment of the invention, in order to form male and female connecting parts respectively that can fit into one another easily, recesses are provided at the side edges of the base plate, bordered by lips with at their end a tooth oriented towards the said recess, and also according to this embodiment the abovementioned guides are obtained by certain parts of the base plate, for example the end of the abovementioned lip of the male connecting parts or parts of the side edges of the sunken module, bent over perpendicularly or essentially perpendicularly to the plane of the base plate.

In this way a sufficient guide between two connected, adjacent sunken modules can be formed in an easy way.

In order to better explain the characteristics of the invention, two preferred embodiments of sunken modules according to the invention are described below, by way of example only and without being limitative in any way, with reference to the accompanying drawings, in which:
figure 1 shows a sunken module according to the invention in the form of a switch, schematically and in perspective;
figures 2 and 3 are views in the directions of the arrows F2 and F3 respectively in figure 1, with certain parts being omitted for the sake of simplicity;
figure 4 shows the part indicated in figure 2 by F4, to a greater scale;
figure 5 shows two sunken modules according to the invention that are to be connected to each other, schematically and in perspective;
figures 6 and 7 show views in the directions of arrows F6 and F7 respectively in figure 5;
figure 8 shows the part indicated in figure 6 by F8;
figures 9 and 10 show a view as in figure 7, but for another position;
figure 11 shows a view as in figure 6, but for another embodiment of the sunken module and in a different position.

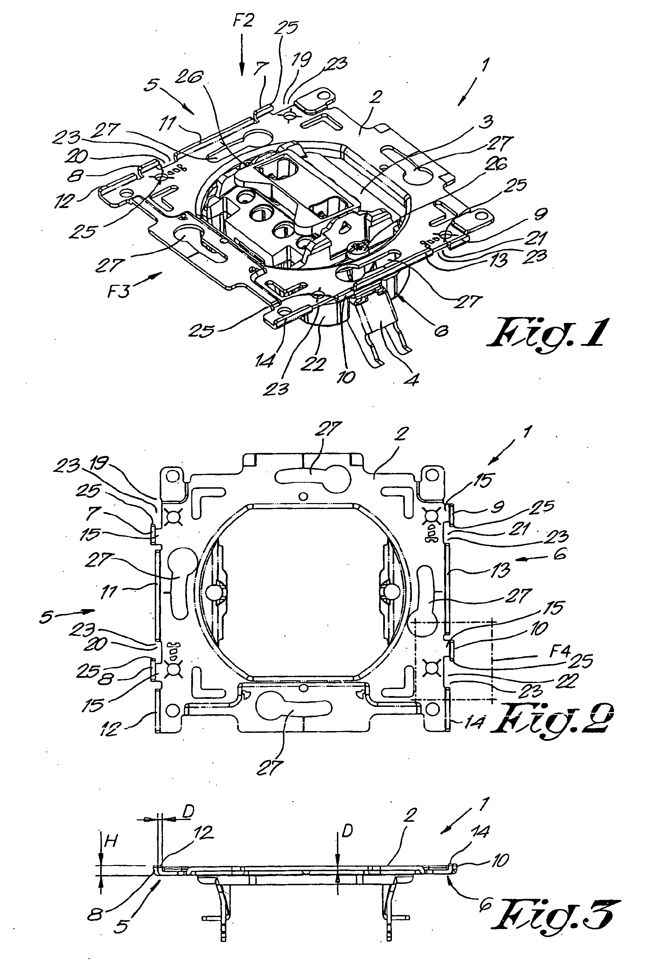

The sunken module 1 shown in figures 1 to 3 is in this case a switch consisting of a base plate 2 on which is provided a body 3 in the form of a switching mechanism and on which are also mounted attachment hooks 4 if necessary.

For the sake of simplicity, the body 3 and the attachment hooks 4 are only shown in figure 1, and the body 3 and the attachment hooks 4 are omitted in the other figures.

The base plate 2 is provided on each of two opposite side edges 5 and 6 with two male connecting parts, respectively male parts 7 and 8 on side edge 5, and male connecting parts 9 and 10 on side edge 6.
The two abovementioned side edges 5 and 6 have parts, i.e. parts 11 and 12 on side edge 5 and parts 13 and 14 on side edge 6 respectively, bent over perpendicularly or essentially perpendicularly along part of their length.

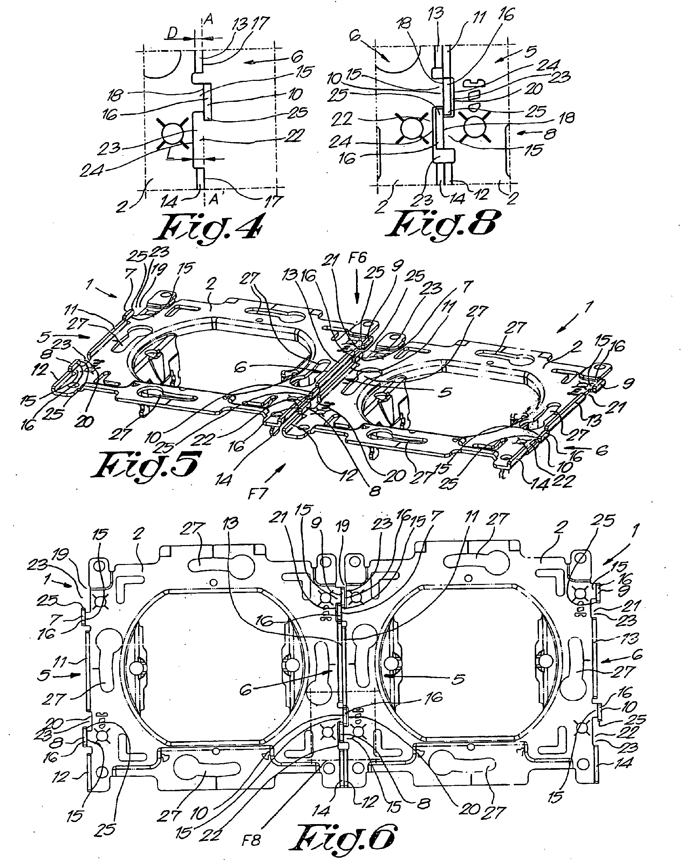

As shown in greater detail in figure 4, the male connecting parts 7 to 10 are each formed by a lip 15 of the base plate 2, whose end 16 is bent over perpendicularly or essentially perpendicularly along a fold line A-A' parallel to the corresponding edges 5-6.

In the example shown, the outside edges 17 of the bent-over parts 11 to 14 of the side edges 5 and 6 are in line with, or essentially in line with, the inside edges 18 of the bent-over ends 16 of the male connecting parts 7 to 10.

In addition to these male connecting parts 7 to 10 there are also female connecting parts 19 to 22, each formed by: a recess 23 in a side edge 5-6 of the base plate 2, where said female connecting parts 19 to 22 are each respectively bordered by a male connecting part 7 to 10; by a wall section 24 of the corresponding edge 5-6 lying deeper than the bent-over sections 11 to 14 of the side edges 5 and 6; and, in the case of the female connecting parts 20 to 22, respectively also by the abovementioned part 11, 13 and 14.

The length L of the not-bent-over part of the lip 15 of the male connecting parts 7 to 10, measured along a direction perpendicular to the corresponding side edge 5-6 from the abovementioned deeper-lying part 24 of the female connecting parts 19 to 22, is equal to or slightly greater than the thickness D of the plate material of the base plate 2.

The positioning of the different connecting parts 7 to 10 and 19 to 22 with respect to one another is such that the male connecting parts of one side edge, namely the male connecting parts 7 and 8 of the side edge 5 and the male connecting parts 9 and 10 of the side edge 6, are located directly opposite the female connecting parts of the opposite side edge, respectively the female connecting parts 21 and 22 on side edge 6 and the female connecting parts 19 and 20 on side edge 5.

The bent-over ends 16 of the male connecting parts 7 to 10 preferably have a tooth 25 in line with the corresponding bent-over end 16, where this tooth 25 is oriented towards an adjacent female connecting part 14 to 17.

The use of a sunken module 1 according to the invention is very simple. The body 3 and the attachment hooks 4 of a sunken module 1 are fitted in an opening in a wall so that the base plate 2 is supported by the wall, in the known way.

The sunken module 1 is then fixed in the abovementioned opening by turning screws 26 so that the attachment hooks 4 are pushed away sideways and the sunken module is fixed solidly into the opening.

Alternatively, before fitting the sunken module 1, screws are inserted through openings 27 in the base plate 2 and are screwed into the wall.

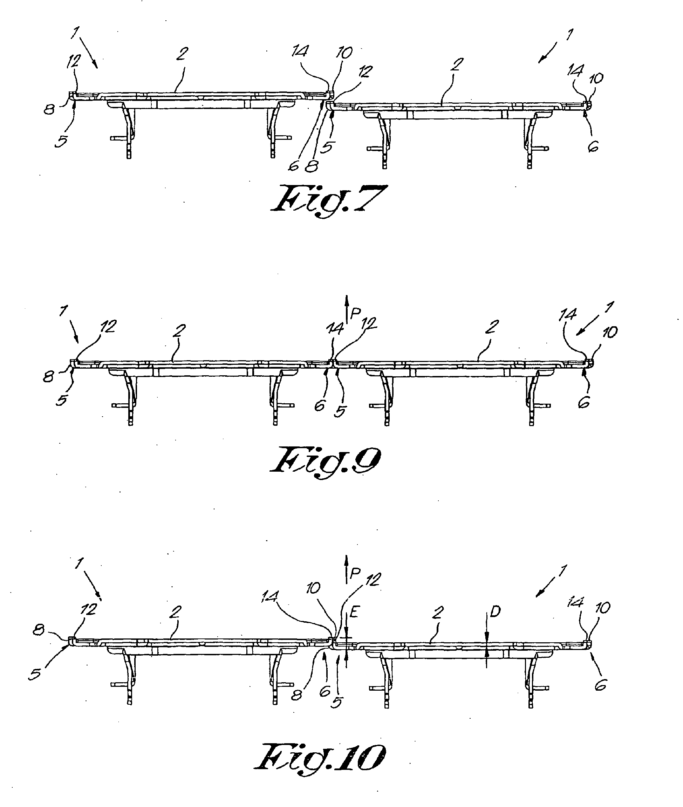

If for example two sunken modules 1 according to the invention are to be mounted next to one another, then they are connected together as shown in figures 5 to 10 by placing a sunken module 1 with one side edge 6 over the side edge 5 of the other sunken module 1 and then hooking the male connecting parts into the female connecting parts by moving both sunken modules 1 with respect to one another in a direction perpendicular to the plane of the base plates 2, as indicated by arrow P in figures 9 and 10 showing successive stages during this movement.

Figure 8 shows in greater detail how the bent-over ends 16 of the male connecting parts 7 to 10, more specifically the teeth 25 of said bent-over ends 16, engage with one another, so preventing the sunken modules 1 from moving apart sideways.

Further, a sideways motion of the sunken modules 1 towards one another is prevented since the sunken modules 1 with their respective bent-over parts 11 to 14 of the connecting side edges 5 and 6 are supported on one another.

From figure 8 it can clearly be seen that during the movement of hooking into one another as described above, the mutually supporting bent-over parts 11 to 14 of the side edges 5 and 6, as well as the teeth 25 engaging with one another of the male connecting parts 7 to 10, form a guide in a direction P perpendicular to the base plates 2 and thus perpendicular to the wall.

In this way according to the invention, the connected sunken modules 1 can be slid slightly with respect to one another in a direction P perpendicular to the wall, so that differences in the level of the plane of the wall round the opening in which the sunken modules 1 are mounted can easily be compensated within a certain tolerance.

The tolerance within which these differences in level can be compensated depends on the distance over which the guides are active and is determined by the height H of the bent-over parts 11 to 14 of the side edges 5 and 6, and/or the height H of the bent-over end 16 of the male connecting parts 7 to 10 and the tooth 25 thereon.

This height H is greater than the thickness D of the plate material of which the base plate 2 is made, and is preferably at least double this thickness D, in order to have sufficient play to compensate for the differences in level of the wall.

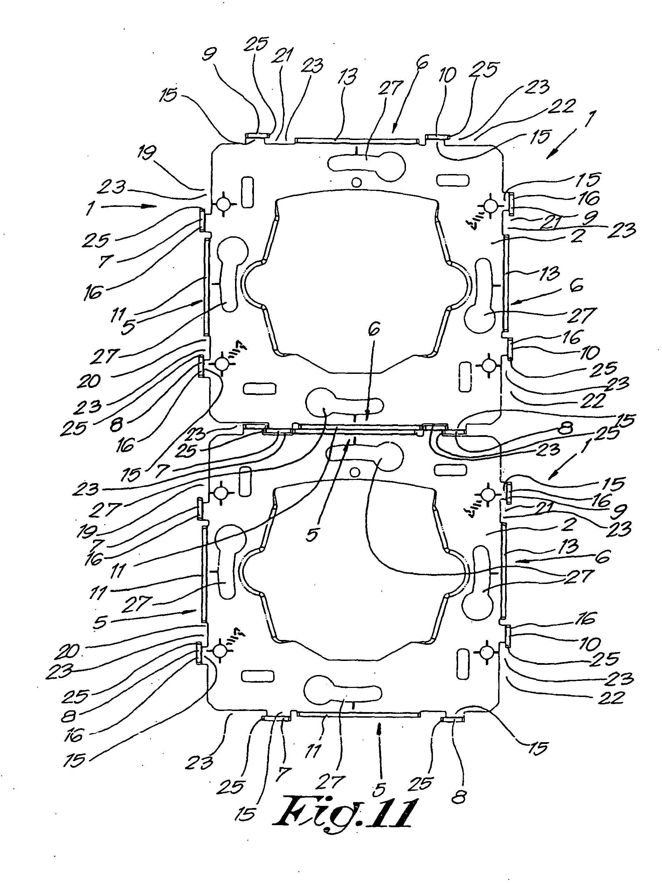

Figure 11 shows two sunken modules according to the invention, but in a different embodiment.

In this case the base plates 2 have female connecting parts 19 to 22 and male connecting parts 7 to 10 on each pair of opposite side edges 5 and 6, completely analogous as in the embodiment described above, and parts 11 and 13 of the side edges 5 and 6 are bent over.

This embodiment of the sunken modules 1 according to the invention permits two sunken modules 1 mounted next to one another, or two sunken modules 1 mounted one above the other, to be connected as shown in figure 11, while there are also guides 25, 11 and 13 for a relative movement of the connected sunken modules 1 in a direction perpendicular, or essentially perpendicular, to the plane of the base plate 2 over a distance H greater than the thickness D of the base plate 2.

The present invention is by no means limited to the embodiments described above.

Clearly, the connecting parts 7 to 10 and 19 to 22 can also be formed in other ways, for example as a male part on the side edge 5-6 of one sunken module 1, in the form of a bent-over lip that can engage with a female connecting part, or in the form of a slot in the base plate 2 of one of the adjacent sunken modules 1 to be connected.

In such a case the guide is formed by the male part being able to slide in the slot over a certain distance, determined by its height.

The present invention is in no way limited to the embodiments described by way of example and shown in the figures; on the contrary, an improved sunken module 1 according to the invention can be made in all shapes and dimensions while remaining within the scope of the invention.

## Claims

1. An improved sunken module (1) such as a power socket, switch or suchlike, essentially comprising a base plate (2) and a body (3) fitted on it, where in the base plate (2) there are respectively female (19-22) and male (7-10) connecting parts on two opposite edges (5, 6), by means of which two sunken modules (1) mounted beside each other or one above the other can be connected, **characterised in that** there is at least one guide to permit a relative movement between two adjacent, connected sunken modules, in a direction perpendicular or essentially perpendicular to the plane of the base plate (2) over a distance (H) which is greater than the thickness (D) of the base plate (2).

2. Improved sunken module according to claim 1, **characterised in that** the abovementioned guide is located on one of the connecting parts (7-10, 19-22).

3. Improved sunken module according to any one of claims 1 or 2, **characterised in that** the guide is located on a male connecting part (7-10) which for this purpose is formed by a lip (15) of the base plate (2) whose end is bent over perpendicularly, or essentially perpendicularly, along a bending line (A-A') parallel to the abovementioned side edge (5-6) of the sunken module (1).

4. Improved sunken module according to any one of the above claims, **characterised in that** the female connecting parts (19-22) are formed by a recess (23) in one of the abovementioned side edges (5-6) of the base plate (2).

5. Improved sunken module according to any one of the above claims, **characterised in that** the female connecting parts (19-22) are bordered by a male connecting part (7-10) and a deeper lying wall part (24) of the side edges (5-6).

6. Improved sunken modules according to claim 3, **characterised in that** the bent-over end (16) of the male connecting parts (7-10) in line with the bent-over end (16) has a tooth (25) oriented towards the female connecting part (19-22), where said tooth can engage with a corresponding tooth (25) of a male connecting part (7-10) of an adjacent sunken module (1).

7. Improved sunken module according to claims 3 and 6, **characterised in that** the guide on the male connecting part (7-10) is formed by the abovementioned tooth (25) on the male connecting part (7-10).

8. Improved sunken module according to any one of the above claims, **characterised in that** each side edge (5-6) has at least one male connecting part (7-10) and at least one female connecting part (19-22), where the male connecting part (7-10) and the female connecting part (19-22) are positioned respectively on one side edge (5-6) directly opposite a female connecting part (19-22) and a male connecting part (7-10) respectively of the opposite side edge (5-6).

9. Improved sunken module according to any one of the above claims, **characterised in that** the abovementioned side edges (5-6) are bent over perpendicularly or essentially perpendicularly along a part (11-14) of their length, so as to form the abovementioned guide.

10. Improved sunken module according to claim 9, **characterised in that** the outside (17) of the bent-over parts (11-14) of the side edges (5-6) is located in line with, or essentially in line with, the inside (18) of the bent-over end (16) of the male connecting part (7-10).

11. Improved sunken module according to any one of claims 9 or 10, **characterised in that** the height (H) of the bent-over edge (11-14) has at least twice the thickness (D) of the base plate (2).

12. Improved sunken module according to claim 3, **characterised in that** the length (L) of the not-bent-over part of the lip (15) of the male connecting part (7-10) measured in the direction perpendicular to the side edge (5-6) from the abovementioned deeper lying part of the wall (24) of the female connecting parts (19-22) is equal to or slightly greater than the thickness (D) of the base plate (2).

## Patentansprüche

1. Verbessertes versenktes Modul (1), wie etwa eine Steckdose, ein Schalter oder dergleichen, im Wesentlichen umfassend eine Grundplatte (2) und einen darauf angebrachten Körper (3), wobei sich in der Grundplatte (2) jeweils aufnehmende (19 bis 22) und einsteckbare (7 bis 10) Verbindungsteile an zwei entgegengesetzten Rändern (5, 6) befinden, durch die zwei versenkte Module (1), die nebeneinander oder übereinander eingebaut sind, verbunden werden können, **dadurch gekennzeichnet, dass** es mindestens eine Führung gibt, um eine relative Bewegung zwischen zwei nebeneinander liegenden verbundenen versenkten Modulen in einer Richtung, die zur Ebene der Grundplatte (2) senkrecht oder im Wesentlichen senkrecht ist, über eine Entfernung (H), die größer ist als die Dicke (D) der Grundplatte (2), zu ermöglichen.

2. Verbessertes versenktes Modul nach Anspruch 1, **dadurch gekennzeichnet, dass** die oben genannte Führung sich auf einem der Verbindungsteile (7-10, 19 bis 22) befindet.

3. Verbessertes versenktes Modul nach einem der Ansprüche 1 oder 2, **dadurch gekennzeichnet, dass** die Führung sich auf einem einsteckbaren Verbindungsteil (7 bis 10) befindet, das zu diesem Zweck durch einen Ansatz (15) der Grundplatte (2) gebildet wird, deren Ende senkrecht oder im Wesentlichen senkrecht entlang einer Biegelinie (A-A') parallel zum oben genannten Seitenrand (5 bis 6) des versenkten Moduls (1) umgebogen ist.

4. Verbessertes versenktes Modul nach einem der vorherigen Ansprüche, **dadurch gekennzeichnet, dass** die aufnehmenden Verbindungsteile (19 bis 22) durch eine Vertiefung ( 23 ) in einem der oben genannten Seitenränder (5 bis 6) der Grundplatte (2) gebildet werden.

5. Verbessertes versenktes Modul nach einem der vorherigen Ansprüche, **dadurch gekennzeichnet, dass** die aufnehmenden Verbindungsteile (19 bis 22) von einem einsteckbaren Verbindungsteil (**7 bis 10**) und einem tiefer liegenden Wandteil (24) der Seitenränder (5 bis 6) umrandet sind.

6. Verbessertes versenktes Modul nach Anspruch 3, **dadurch gekennzeichnet, dass** das umgebogene Ende (16) der einsteckbaren Verbindungsteile (7 bis 10) auf einer Linie mit dem umgebogenen Ende (16) einen Zahn (25) aufweist, der in Richtung auf den aufnehmenden Verbindungsteil (19 bis 22) ausgerichtet ist, wobei der Zahn in einen entsprechenden Zahn (25) eines einsteckbaren Verbindungsteils (7 bis 10) eines daneben liegenden versenkten Moduls (1) eingreifen kann.

7. Verbessertes versenktes Modul nach Anspruch 3 und 6, **dadurch gekennzeichnet, dass** die Führung auf dem einsteckbaren Verbindungsteil (7 bis 10) durch den oben genannten Zahn (25) auf dem einsteckbaren Verbindungsteil (7 bis 10) gebildet wird.

8. Verbessertes versenktes Modul nach einem der vorherigen Ansprüche, **dadurch gekennzeichnet, dass** jeder Seitenrand (5 bis 6) mindestens ein einsteckbares Verbindungsteil (7 bis 10) und mindestens ein aufnehmendes Verbindungsteil (19 bis 22) aufweist, wobei das einsteckbare Verbindungsteil (7 bis 10) und das aufnehmende Verbindungsteil (19 bis 22) jeweils auf einem Seitenrand (5 bis 6) **direkt** gegenüber einem aufnehmenden Verbindungsteil (19 bis 22) und einem einsteckbaren Verbindungsteil (7 bis 10) jeweils des gegenüberliegenden Seitenrandes (5 bis 6) angeordnet sind.

9. Verbessertes versenktes Modul nach einem der vorherigen Ansprüche, **dadurch gekennzeichnet, dass** die oben genannten Seitenränder (5 bis 6) senkrecht oder im Wesentlichen senkrecht an einem Teil (11 bis 14) ihrer Länge entlang umgebogen sind, um die oben genannte Führung zu bilden.

10. Verbessertes versenktes Modul nach Anspruch 9, **dadurch gekennzeichnet, dass** die Außenseite (17) der umgebogenen Teile (11 bis 14) der Seitenränder (5 bis 6) sich auf einer Linie, oder im Wesentlichen auf einer Linie, mit der Innenseite (18) des umgebogenen Endes (16) des einsteckbaren Verbindungsteils (7 bis 10) befindet.

11. Verbessertes versenktes Modul nach einem der Ansprüche 9 oder 10, **dadurch gekennzeichnet, dass** die Höhe (H) des umgebogenen Randes (11 bis 14) die doppelte Dicke (D) aufweist wie die Grundplatte (2).

12. Verbessertes versenktes Modul nach Anspruch 3, **dadurch gekennzeichnet, dass** die Länge (L) des nicht umgebogenen Teils des Ansatzes (15) des einsteckbaren Verbindungsteils (7 bis 10), in der Richtung senkrecht zum Seitenrand (5 bis 6) von dem oben genannten tiefer liegenden Teil der Wand (24) der aufnehmenden Verbindungsteile (19 bis 22) aus gemessen, gleich oder geringfügig größer ist als die Dicke (D) der Grundplatte (2).

## Revendications

1. Module encaissé amélioré (1) tel qu'une prise de courant, un interrupteur ou analogue, comprenant essentiellement une plaque de base (2) et un corps (3) installé sur celle-ci, où, dans la plaque de base (2), se trouvent, respectivement, des parties de connexion femelles (19-22) et mâle (7-10) sur deux bords opposés (5, 6), au moyen desquelles deux modules encaissés (1) montés l'un à côté de l'autre ou l'un pardessus l'autre peuvent être connectés, **caractérisé en ce qu'**il y a au moins un guidage pour permettre un mouvement relatif entre deux modules encaissés connectés adjacents, dans une direction perpendiculaire ou essentiellement perpendiculaire au plan de la plaque de base (2) sur une distance (H) qui est supérieure à l'épaisseur (D) de la plaque de base (2).

2. Module encaissé amélioré selon la revendication 1, **caractérisé en ce que** le guidage mentionné ci-dessus est positionné sur une des parties de connexion (7-10, 19-22).

3. Module encaissé amélioré selon l'une quelconque des revendications 1 ou 2, **caractérisé en ce que** le guidage est positionné sur une partie de connexion mâle (7-10) qui, dans ce but, est formée par une lèvre (15) de la plaque de base (2) dont l'extrémité est inclinée de façon perpendiculaire, ou essentiellement perpendiculaire, le long d'une ligne de pliage (A-A') parallèle au bord latéral mentionné ci-dessus (5-6) du module encaissé (1).

4. Module encaissé amélioré selon l'une quelconque des revendications précédentes, **caractérisé en ce que** les parties de connexion femelles (19-22) sont formées par un évidement (23) dans un des bords latéraux mentionnés ci-dessus (5-6) de la plaque de base (2).

5. Module encaissé amélioré selon l'une quelconque des revendications précédentes**, caractérisé en ce que** les parties de connexion femelles (19-22) sont bordées par une partie de connexion mâle (7-10) et une partie de paroi positionnée plus profondément (24) des bords latéraux (5-6).

6. Module encaissé améliorés selon la revendication 3, **caractérisé en ce que** l'extrémité inclinée (16) des parties de connexion mâles (7-10) en ligne avec l'extrémité inclinée (16) possède une dent (25) orientée vers la partie de connexion femelle (19-22), où ladite dent peut entrer en prise avec une dent correspondante (25) d'une partie de connexion mâle (7-10) d'un module encaissé adjacent (1).

7. Module encaissé amélioré selon les revendications 3 et 6, **caractérisé en ce que** le guidage sur la partie de connexion mâle (7-10) est formé par la dent mentionnée ci-dessus (25) sur la partie de connexion mâle (7-10).

8. Module encaissé amélioré selon l'une quelconque des revendications précédentes, **caractérisé en ce que** chaque bord latéral (5-6) possède au moins une partie de connexion mâle (7-10) et au moins une partie de connexion femelle (19-22), où la partie de connexion mâle (7-10) et la partie de connexion femelle (19-22) sont positionnées respectivement sur un bord latéral (5-6) directement en face d'une partie de connexion femelle (19-22) et une partie de connexion mâle (7-10) respectivement du bord latéral opposé (5-6).

9. Module encaissé amélioré selon l'une quelconque des revendications précédentes, **caractérisé en ce que** les bords latéraux mentionnés ci-dessus (5-6) sont inclinés de façon perpendiculaire ou essentiellement perpendiculaire le long d'une partie (11-14) de leur longueur, afin de former le guidage mentionné ci-dessus.

10. Module encaissé amélioré selon la revendication 9, **caractérisé en ce que** l'extérieur (17) des parties inclinées (11-14) des bords latéraux (5-6) est positionné en ligne avec, ou essentiellement en ligne avec, l' intérieur (18) de l'extrémité inclinée (16) de la partie de connexion mâle (7-10).

11. Module encaissé amélioré selon l'une quelconque des revendications 9 ou 10, **caractérisé en ce que** la hauteur (H) du bord incliné (11-14) est égale à au moins deux fois l'épaisseur (D) de la plaque de base (2).

12. Module encaissé amélioré selon la revendication 3, **caractérisé en ce que** la longueur (L) de la partie non inclinée de la lèvre (15) de la partie de connexion mâle (7-10) mesurée dans la direction perpendiculaire au côté latéral (5-6) à partir de la partie se trouvant plus profondément mentionnée ci-dessus de la paroi (24) des parties de connexion femelles (19-22) est égale ou légèrement supérieure à l'épaisseur (D) de la plaque de base (2).
